# EUROPÄISCHE PATENTANMELDUNG

(11) **EP 2 309 162 A2**
(43) Veröffentlichungstag der Anmeldung: **13.04.2011**
(21) Anmeldenummer: 10013271.1
(22) Anmeldetag: 04.10.2010
(51) Int. Cl.: F16K 24/00

(54) **Be- und Entlüftungsautomat mit Membran als Systembaukasten**

(30) Priorität: 06.10.2009 DE 202009013793 U
(71) Anmelder: Wilhelm Schauerte GmbH & Co. KG Geschäftsführung, 57350 Lennestadt-Grevenbrück (DE)
(72) Erfinder: Hidde, Axel, R., Dr.-Ing., 57076 Siegen (DE); Klose, Odo, Prof., 42285 Wuppertal (DE)

(57) **Zusammenfassung**

Der Systembaukasten des Be- und Entlüftungsautomaten besteht im wesentlichen aus einem Ventilkörper-Anschlußstück (2) mit einem federbeaufschlagten Rückschlagventil (24) mit verschiedenen Anschlußgewinden, verschiedenen anwendungsbezogenen Schraubkappen (41) zum Verschließen, zum Be- und Entlüften und zum Messen sowie einem Wasserfangbehälter mit Entlüftung und ggf. Zustandsanzeige und/oder Signalisierung.

## Beschreibung

Die Erfindung betrifft einen Be- und Entlüftungsautomaten als Systembaukasten - insbesondere ein automatisches Be- und Entlüftungsventil für Heizungs- und Warmwasseranlagen oder geschlossene Rohrkreisläufe unter besonderer Berücksichtigung des Einsatzes von Wiederverwendungsteilen und des hydraulischen Abgleichs.

Entlüftungsventile finden überall dort Anwendung, wo Medien in geschlossenen Anlagen und Systemen, Behältern, Kesseln, Speichern oder Rohrleitungen der Thermik unterliegen und Druckausgleich stattfinden muß. Bekannte Anwendungen sind Druckluftanlagen, wasserführende Anlagen, Kraftstoffsysteme und -behälter, geschlossene Systeme in der Verkehrstechnik. Häufig sind Be- und Entlüftungsventile für flüssige Stoffe als Schwimmerventile mit Verschlußmechanismus ausgeprägt.

In der mehr spezifischen Anwendung der Heizungs- und Warmwasseranlage übernehmen die Be- und Entlüftungsventile im wesentlichen drei Funktionen/Betriebsarten
- Standhalten der Druckprüfung bis ca. 10 bar
- Helfen beim Befüll- und Entleerungsvorgang, ca. 3 bar
- Sicherstellen der Automatikentlüftung, ca. 3 bar.

Die Membrantechnik ist noch eine junge Technologie, unterliegt aber wegen nahezu unbegrenzter Einsatzmöglichkeiten permanenter Erneuerung. Der Einsatz von Membranen findet statt in unterschiedlichsten Disziplinen der Technik, wie Medizin/Dialyse, Getränkeindustrie/Filterung und Alköholentzug, Brauchwasser/Reinigung und Filtration, Verkehrs-Fahrzeugtechnik/Hohlraumentlüftung, etc. Membrane werden als semipermeable Folien hergestellt und ihr Einsatzzweck wird durch verschiedene Produktparameter bestimmt; sie halten hohen Flüssigkeitsdrücken stand, sind aber durchlässig für gasförmige Medien. Der Membranwerkstoff ist aus Kunststoff, wie z.B. Polytetrafluorethylen (PTFE) oder Polypropylen (PP), ist oleophobisch und/oder hydrophobisch, in weiten Bereichen chemisch kompatibel, sterilisationsgeeignet, nicht benetzbar bei kleinsten Oberflächenspannungen.

Der hydraulische Abgleich - nach DIN EN 12 831 (Jun. 2003) und gefordert in der VOB/C DIN 18 380 - beschreibt ein Verfahren, mit dem innerhalb einer Heizungsanlage jeder Heizkörper oder Heizkreis einer Flächenheizung bei einer festgelegten Vorlauftemperatur der Heizungsanlage genau mit der Wärmemenge versorgt wird, die benötigt wird, um die für die einzelnen Räume gewünschte Raumtemperatur zu erzielen. Dies wird üblicherweise bei Planung, Montage und Inbetriebnahme der Anlage erreicht; auch ein nachträglicher hydraulischer Abgleich ist mittels im Rohrnetz vorhandener Armaturen gegeben, wie voreinstellbare Thermostatventile. Ziele des hydraulischen Abgleichs sind
- Definierte Massenströme an jedem Heizkörper im Auslegungsfall
- Gleichmäßige Massenstromverteilung in Aufheizphasen
- Gute Regeleigenschaften des Thermostatventils.

Um die Durchflußmenge für jeden Heizkörper voreinzustellen, werden entweder Thermostatventile mit Durchflußkennwert durch angepaßten kV-Kegel eingesetzt oder mittels der Rücklaufverschraubungen werden die Durchflußwiderstände eingestellt. Da in jedem Fall eine entlüftete Heizungs- oder Warmwasseranlage Grundvoraussetzung für den Abgleich ist, ist der Einsatz eines Entlüftungsautomaten am Heizkörper oder Warmwassergerät naheliegend, der außerdem meßtechnische Voraussetzungen für die Durchführbarkeit des hydraulischen Abgleichs schafft.

Im folgenden wird der Stand der Technik bezogen auf Be- und Entlüftungsventile der eingangs beschriebenen Art gewürdigt. Gemäß dem Stand der Technik sind - je nach Anwendungsbezug - eine Vielzahl von Typen von Be- und Entlüftungsventilen bekannt. Be- und Entlüftungen für Hydraulik-Anlagen und Brennstofftanks wurden im wesentlichen nicht berücksichtigt.

Das Gebrauchsmuster DE 299 00 221 stellt eine Entlüftungsvorrichtung mit einem Entlüftungs- und Entleerungsventil - insbesondere für Heizkörper - vor, welches ein aus einem Schraubstutzen bestehendes Gehäuse mit einer darin verstellbaren Ventilspindel als Entlüftungs- oder Entleerungsschraube besitzt, und sich durch besonders rationelle Fertigung auszeichnet.

Das Entlüftungs- und Entleerungsventil wird händisch betrieben.

Die internationale Anmeldung WO 2004/81 457/europäische Anmeldung EP 1 601 914/deutsches Gebrauchsmuster DE 203 39 86 beschreibt ein mechanisches Entlüftungsventil für Heizkörper, wobei der Entlüftungskanal durch Drehen oder Drücken des Ventilkörpers - auch gegen eine Rückstellkraft - die Öffnung zwischen Außenraum und Heizkörperinnern freigibt.

Durch nicht dauerhafte Öffnung des Entlüftungskanals sind Schwierigkeiten beim Befüllen der Anlage zu erwarten; zum Befüllen der Anlage ist der Haltekörper oder der Ventilkörper zu lösen.

Die deutsche Patentschrift DE 199 00 472/europäische Patentanmeldung EP 1 018 615 stellt einen Bausatz für ein Entlüftungsventil für Heizkörper o.ä. dar, besitzt ein Gehäuse mit einem Schraubstutzen für seine Befestigung in einer Öffnung des Heizkörpers und eine in diesem Gehäuse in axialer Richtung mittels Gewinde axial verstellbare Ventilspindel als Entlüftungsschraube oder in einer weiteren Anwendung als Entleerungsschraube, die eine Durchgangsöffnung in eine Kammer aufweist und/ oder eine solche Durchgangsöffnung durchsetzt bzw. in Verschlußstellung abschließt.

Ziel der Entwicklung ist die Schaffung einer Entlüftungsvorrichtung der eingangs genannten Art, mit welcher eine Rationalisierung insbesondere bei der Fertigung solcher Entlüftungs- und Entleervorrichtungen erreicht werden kann.

Das deutsche Gebrauchsmuster DE 202 18 676 stellt ein Entlüftungsventil für Heizkörper oder Heizanlagen mit einer axial verstellbaren Entlüftungsschraube mit einem mehrkantförmigen Kopf vor, welches eine Abdeckkappe besitzt, die abnehmbar und so ausgeformt ist, daß mit ihr der Mehrkant-Kopf der Entlüftungsschraube bedient werden kann.

Die deutsche Offenlegung DE 197 35 812 beschreibt ein Heizkörper-Entlüftungsventil für beengte Zugangsbereiche und dadurch schlechte Handhabbarkeit derart, daß das halbautomatische Ventil eine ferromagnetische Kupplung besitzt, die entgegen einer mechanischen Federwirkung aber mit der Strömungsrichtung eine über einen Permanentmagneten veranlaßte Ventilöffnung bewirkt.

Die deutsche Offenlegung DE 101 61 440 offenbart ein Heizkörper-Entlüftungsventil bestehend aus einem Nippel mit Gewindeansatz für den Heizkörpereinbau, einem Deckel mit einer Bohrung, in die ein zylindrischer Hohlkörper mit Innengewinde eingepreßt wird, der über eine Drainageschraube einen Drainageeinsatz mit drehbarem Auslaß befestigt. Mittels der Gewindeschraube mit konischem Ansatz wird die Verbindungsbohrung des zylindrischen Körpers verschlossen.

Das Gebrauchsmuster DE 77 17 347 stellt ein Entlüftungsventil für einen Heizkörper vor, mit einem an dem Heizkörper zu befestigenden Gehäuse, das eine Axialbohrung und in der Axialbohrung einen Ventilsitz und ein Innengewinde aufweist, und mit einer von außen zu betätigenden Spindel, die am inneren freien Ende einen Ventilkegel und im Abstand von dem Ventilkegel ein in das Innengewinde des Gehäuses geschraubtes Außengewinde aufweist, mit einem von der äußeren Stirnseite ausgehenden Sackloch in der Spindel, das mit einer zwischen Ventilkegel und Außengewinde mündenden Querbohrung als Entlüftungskanal dienend verbunden ist.

Ein nach obigem Wirkprinzip arbeitendes Heizkörper-Entlüftungsventil wird auch in der deutschen Patentschrift DE 42 00 856 vorgestellt.

Die deutsche Offenlegung DE 10 2006 015 263 offenbart ein Be- und Entlüftungsventil einfacher Bauart mit semipermeabler Membran, welches die Funktionen/Betriebsarten Druckprüfen, Befüllen, Entleeren und Automatikentlüften erfüllt. Das Ventil besteht im wesentlichen aus einer zylinderförmigen Anordnung und kommt ohne bewegliche Teile aus. Das Membranelement stellt das Bindeglied zwischen dem flüssigkeitsgefüllten Innenraum - dem Heizkörper oder der Heizungs- oder Warmwasseranlage - und dem Außenraum dar. Semipermeable Membranen halten - je nach Aufbau und Beschaffenheit - Flüssigkeiten zurück - oder sind für diese undurchlässig - und lassen gasförmige Medien entweichen.

Die Nachteile des Ventils werden beim Schnellentlüften während des Befüllens oder Be- oder Entlüften während des Entleerens deutlich. Zu diesem Zweck wird das Beund Entlüftungsventil aus seinem Ventilsitz soweit gelöst, bis die zuvor gedichtete Durchgangsbohrung im Anschluß-Gewindezapfen außen sichtbar wird und die Gase entweichen können oder die Luft angesaugt werden kann. Nachfolgendes Wasser wird jedoch nicht zurückgehalten und dessen Austritt kann nur durch manuelles Verschließen verhindert werden.

Dieser nicht unerhebliche Nachteil wird durch die Nachfolgeentwicklung eines Beund Entlüftungsautomaten - Offenlegung DE 10 2006 021 454 - beseitigt, mittels einer zusätzlichen Schwimmerventil-Einrichtung. Die Durchgangsbohrung im Gewindezapfen des Be- und Entlüftungsautomaten wird nach oberhalb der Schwimmerventil-Einrichtung verlegt und kann durch Drehen der Verschlußkappe des Entlüftungsautomaten geöffnet oder verschlossen werden. Ein in der Verschlußkappe befestigter, durch die Membran hindurchtretender - diese jedoch dicht schließend - Führungsstift wirkt ebenfalls durch die Schraubbewegung auf den Schwimmer des im Unterteil des Automaten angebrachten Schwimmerventils.

Der Be- und Entlüftungsautomat kann als Durchgangs- oder Eckventil ausgeprägt sein. Weiterhin sind die Ausführungsformen mit Flachmembran/Membranscheibe oder Rohrmembran oder einer anders geformten, mehrdimensionalen Membran möglich.

Gemäß der europäischen Patentanmeldung EP 1 035 365 wird ein Universalanschluß zur Verbindung eines unter Druck stehenden Fluidsystems mit einer Nutzungseinrichtung, bestehend aus einem Ventil mit einem Ventilgehäuse, in dessen Bohrung ein selbstschließendes federbeaufschlagtes Rückschlagventil angeordnet ist und einem mit diesem verbindbaren Ventilöffner, wobei der in der Bohrung des Ventilgehäuses angeordnete federbeaufschlagte Ventilkörper des Rückschlagventils beim Einschrauben des Ventilöffners in das Ventilgehäuse durch dessen Anschlußdorn gegen den Federdruck axial in die Offenstellung des Ventils verschiebbar ist, und der Ventilöffner als Adapter mit einem Handrad mit Außengewinde und einer zentralen Bohrung zur drehbaren Aufnahme des Anschlußdoms ausgebildet ist, und das Ventilgehäuse eine Bohrung mit einem Innengewinde zur lösbaren Befestigung des Handrads aufweist.

Der Universalanschluß arbeitet wie eine 'Steckdose' für Fluidsysteme; das selbstschließende federbeaufschlagte Rückschlagventil verhindert ein Auslaufen von Flüssigkeiten während des Steckvorgangs. Mit dem Steckvorgang wird das federbeaufschlagte Rückschlagventil geöffnet.

Alle vorgestellten Veröffentlichungen eignen sich nur bedingt oder gar nicht für den spezifischen Einsatz eines Be- und Entlüftungsautomaten als Systembaukasten - insbesondere nicht als ein automatisches Be- und Entlüftungsventil für Heizungs-und Warmwasseranlagen oder geschlossene Rohrkreisläufe unter besonderer Berücksichtigung des Einsatzes von Wiederverwendungsteilen und des hydraulischen Abgleichs.

Der Erfindung liegt daher die Aufgabe zu Grunde, eine Einrichtung nach dem Oberbegriff des Anspruchs 1, einen Be- und Entlüftungsautomaten als Systembaukasten - insbesondere ein automatisches Be- und Entlüftungsventil für Heizungs- und Warmwasseranlagen oder geschlossene Rohrkreisläufe unter besonderer Berücksichtigung des Einsatzes von Wiederverwendungsteilen und des hydraulischen Abgleichs zu schaffen.

Diese Aufgabe wird erfindungsgemäß durch die kennzeichnenden Merkmale des Anspruchs 1 gelöst; auf vorteilhafte Ausgestaltungen nehmen die Unteransprüche Bezug. Ziel ist der Aufbau eines Be- und Entlüftungsautomaten als Systembaukasten - insbesondere eines automatischen Be- und Entlüftungsventils für Heizungs- und Warmwasseranlagen oder geschlossene Rohrkreisläufe unter besonderer Berücksichtigung des Einsatzes von Wiederverwendungsteilen und des hydraulischen Abgleichs.

Der Systembaukasten des Be- und Entlüftungsautomaten für Heizungs- und Warmwasseranlagen besteht im wesentlichen aus einem Ventilkörper-Anschlußstück mit einem federbeaufschlagten Rückschlagventil mit verschiedenen Anschlußgewinden, verschiedenen anwendungsbezogenen Schraubkappen zum Verschließen, zum Be-und Entlüften und zum Messen sowie einem Wasserfangbehälter mit Entlüftung und ggf. Behälter-Zustandsanzeige und/oder -Signalisierung.

Das Ventilkörper-Anschlußstück ist ein hohlzylinderförmiger Körper mit einem Gehäuse-Anschlußgewinde - beispielhaft dargestellt in den Ausführungen 1/8", 1/4", 3/8" und 1/2". Das Außengewinde ist entweder mit einem Dicht-/O-Ring versehen oder ein oberer Gewindegang erhält einen dichtenden Überzug eines Elastomers - eine Gewindedichtung - um das Anschlußstück dichtend in ein Gehäuse zu montieren. Ein davon oberhalb angebrachtes weiteres Aufnahme-Außengewinde nimmt eine Schraubkappe in verschiedenen Ausführungen auf. Das Ventilkörper-Anschlußstück hat darüber hinaus eine innenliegende, ebenfalls topfförmige Aufnahme für die Positionierung des Rückschlagventils bestehend aus Druckfeder und Kugeldichtung. Ein in den Topf weisender zylinderförmiger Überstand hilft, Kugeldichtung und Feder in der Aufnahme zu verrasten.

Zur weiteren vorteilhaften Ausgestaltung des Systembaukastens gehört eine Ablaßschraubkappe, die eine innenliegende Dichtscheibe oder Flachdichtung zwecks dichtendem Abschluß des Ventilkörper-Anschlußstücks mit federbeaufschlagtem Rückschlagventil.

Als eine weitere Ausführung ist eine Entlüftungskappe vorgesehen, die in Verbindung mit dem Ventilkörper-Anschlußstück als Dauerentlüftung fungiert. Die Schraubkappe weist einen kleinen Kanal/Bohrung im Deckel auf, der die Verbindung zwischen Ventilinnenraum und Außenraum herstellt. Außerdem gehört eine semipermeable Membranpatrone zum Geräteumfang, die im Medienkanal positioniert wird und eine Zwangsführung der Entlüftung über die Patrone bewirkt. Weiterhin besitzt die Entlüftungsschraubkappe innen in ihrer Mitte einen Führungsstift als Öffner, der in Abhängigkeit der Kappen-Schraubtiefe auf die federbeaufschlagte Kugeldichtung des Rückschlagventils wirkt und dieses zu Öffnen in der Lage ist. Über die semipermeable Membran werden Gase abgeleitet und flüssige Medien zurückgehalten.

Eine weitere Ausgestaltung der Erfindung sieht vor, daß das Ventilkörper-Anschlußstück mit einem Meßanschluß, z.B. für die Druck- und/oder die Temperaturmessung, versehen wird, z.B. für die Durchführung des hydraulischen Abgleichs. Zu diesem Zweck wird die Schraubkappe mit einer Durchgangsbohrung versehen, um die Kappe für die Aufnahme des Meßanschlusses vorzubereiten.
- Der Meßanschluß ist ein zylindrischer topfförmiger Hohlkörper mit Innengewinde - nicht zwingend vorgegeben - und auf der der Öffnung entgegengesetzten Seite mit einem Befestigungsschaft versehen und der in der dafür vorbereiteten Schraubkappe mittels eines Befestigungsrings drehbar befestigt wird.
- Außerdem hat der Befestigungsschaft einen Entlüftungskanal in Form einer axialen mittigen Sackbohrung sowie an dessen unterem Ende eine Querbohrung, die mit der Sackbohrung in Verbindung steht.
- Gemäß einer weiteren vorteilhaften Ausgestaltung der Erfindung weist der Befestigungsschaft unterhalb der Sackbohrung einen Führungsstift auf, der auf die federbeaufschlagte Kugeldichtung des Rückschlagventils des Ventilkörper-Anschlußstücks wirkt. Je weiter die Schraubkappe mit dem Anschlußstück verschraubt wird, desto weiter öffnet sich die federbeaufschlagte Kugeldichtung.

Meßanschluß und Schraubkappe sind gegeneinander mittels eines Dichteinsatzes gedichtet. Die Schraubkappe weist außer der Durchgangsbohrung für den Meßanschluß nur noch die Besonderheit der innen, unterhalb des Deckels liegenden Aussparung für die Aufnahme des Befestigungsrings auf.

Zur Komplettierung des Systemsbaukastens gehört weiterhin ein Wasserfangbehälter, dessen Anschluß-Außengewinde passend zum Anschluß-Innengewinde des Meßanschlusses gestaltet ist. Der Wasserfangbehälter ist ein Sammelbehälter für Fluide mit einer eigenen Entlüftung und hilft bei vorbereitenden Arbeiten für den hydraulischen Abgleich oder sonstigen Arbeiten an der Warmwasserversorgung. Mit Hilfe der an den Meßanschlüssen befestigten Behälter, können die Arbeitsgänge des hydraulischen Abgleichs von einer Person vorgenommen werden.

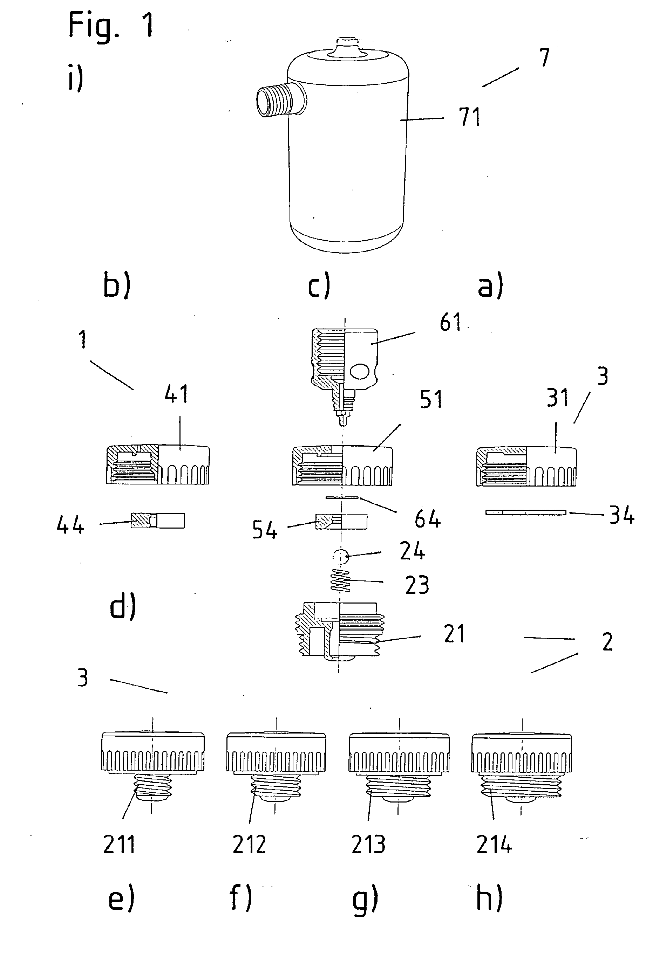

Der Gegenstand der Erfindung wird nachfolgend anhand der als Anlage beigefügten Zeichnungen von Ausführungsbeispielen weiter verdeutlicht. Es zeigen
- Fig. 1: Systembaukasten Be- und Entlüftungsautomat
- Fig. 1a: Ablaßkappe mit Dichtscheibe
- Fig. 1 b: Entlüfterkappe mit Öffner und Membranpatrone
- Fig. 1c: Meßkappe mit Meßgeräte-Anschluß und Dichteinsatz
- Fig. 1 d: Ventilkörper-Anschlußstück mit Kugelventil
- Fig. 1e: Ventilkörper-Anschluß 1/8"
- Fig. 1f: Ventilkörper-Anschluß 1/4"
- **Fig. 1g**: Ventilkörper-Anschluß 3/8"
- **Fig. 1h**: Ventilkörper-Anschluß 1 /2"
- **Fig. 1i**: Wasserfangbehälter
- **Fig. 2**: Ablaßventil
- **Fig. 2a**: Ablaßventil, geöffnet
- **Fig. 2b**: Ablaßventil, geschlossen
- **Fig. 3**: Entlüftungsventil
- **Fig. 3a**: Entlüftungsventil, geöffnet
- **Fig. 3b**: Entlüftungsventil, geschlossen
- **Fig. 4**: Meßventil
- **Fig. 4a**: Meßventil, geöffnet
- **Fig. 4b**: Meßventil, geschlossen
- **Fig. 5**: Wasserfangbehälter

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

Wie aus **Fig. 1** ersichtlich, besteht der Systembaukasten des Be- und Entlüftungsautomaten **1** im wesentlichen aus einem Ventilkörper-Anschlußstück **2 -** **Fig. 1d** mit einem federbeaufschlagten Rückschlagventil mit verschiedenen Anschlußgewinden **21 -** **Fig. 1e , 1f , 1g , 1h** , verschiedenen anwendungsbezogenen Schraubkappen **3 -** **Fig. 1** **a , 1 b , 1 c** zum Verschließen, zum Be- und Entlüften und zum Messen sowie einem Wasserfangbehälter **7 -** **Fig.1i** mit Entlüftung und ggf. Zustandsanzeige und/oder Signalisierung.

Das in **Fig. 1d** vorgestellte Ventilkörper-Anschlußstück **2** ist ein hohlzylinderförmiger Körper mit einem Gehäuse-Anschlußgewinde **21** - beispielhaft dargestellt in den maßlichen Ausführungen 1/8" **211** 1/4" **212** , 3/8" **213** und 1/2" **214 -** **Fig. 1e , 1f , 1g , 1h** . Ein in dem topfförmigen Zylinder eingebrachtes Rückschlagventil besteht aus der Druckfeder **23** und der Kugeldichtung **24** .

Zur weiteren vorteilhaften Ausgestaltung des Systembaukastens **1** gehört eine Ablaßschraubkappe **31 -** **Fig. 1a** , die eine innenliegende Dichtscheibe oder Flachdichtung 34 besitzt zwecks dichtendem Abschluß des Ventilkörper-Anschlußstücks **2** mit federbeaufschlagtem Rückschlagventil **23 , 24** , dienend als Ablaßventil 11 . Die Kappe schließt das Ventil sicher ab und schützt vor Feuchtigkeit und Vandalismus.

Als eine weitere Ausführung ist eine Entlüftungskappe **41 -** **Fig. 1b** vorgesehen, die in Verbindung mit dem Ventilkörper-Anschlußstück **2** und der Membranpatrone **44** als Dauerentlüftung fungiert und das semipermeable Entlüftungsventil **12** bildet.

Eine weitere Ausgestaltung der Erfindung sieht vor, daß das Ventilkörper-Anschlußstück **2** mit einer Schraubkappe **51** und einem Meßanschluß **61 -** **Fig. 1c** **,** z.B. für die Druck- und/oder die Temperaturmessung, versehen wird, z.B. für die Durchführung des hydraulischen Abgleichs, und in dieser Form das Meßventil **13** darstellt. Der Befestigungsring **64** sichert den Meßanschluß in der Meßkappe und der Dichteinsatz **54** stellt die Dichtheit zwischen den beiden Komponenten her.

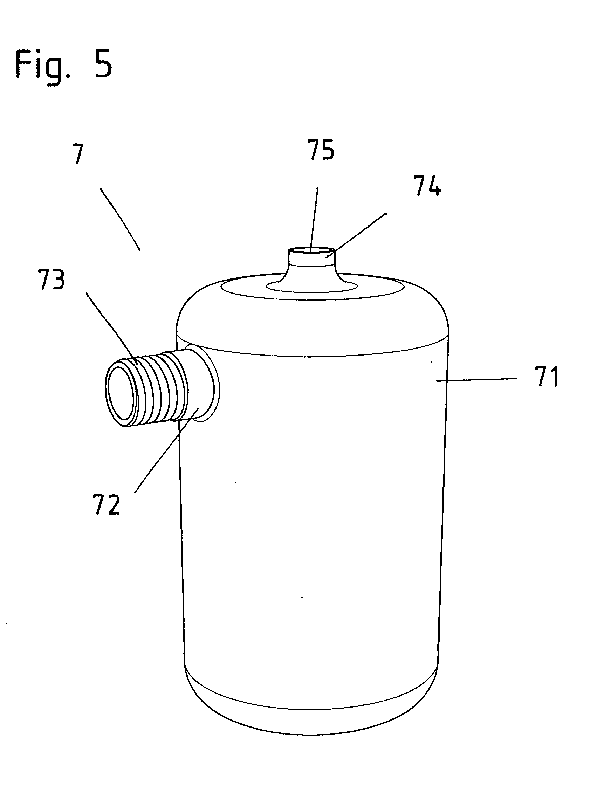

Zur Komplettierung des Systemsbaukastens **Fig.1i** und **Fig. 5** gehört weiterhin ein Wasserfangbehälter **7** , dessen Anschluß-Außengewinde 73 des Stutzens **72** passend zum Anschluß-Innengewinde 62 des Meßanschlusses **61** gestaltet ist. Der Wasserfangbehälter ist ein Sammelbehälter für Fluide mit einer eigenen Entlüftung **75** auch Membranentlüftung und hilft bei vorbereitenden Arbeiten für den hydraulischen Abgleich oder sonstigen Arbeiten an der Warmwasserversorgung. Mit Hilfe der an den Meßanschlüssen 61 befestigten Behälter **71** , können die Arbeitsgänge des hydraulischen Abgleichs von einer Person vorgenommen werden.

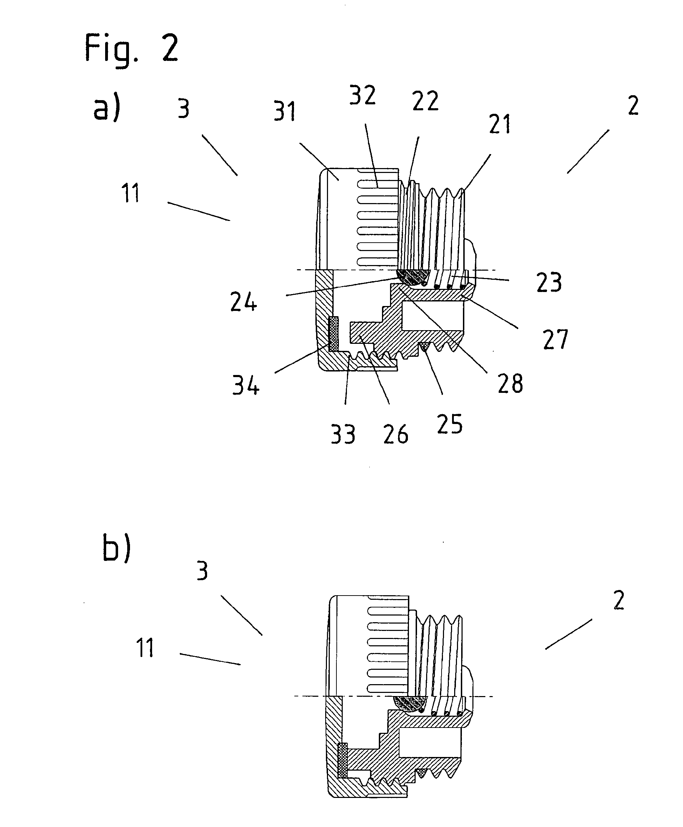

**Fig. 2** zeigt das Ablaßventil **11** aus der Kombination von Ventilkörper-Anschlußstück 2 und Ablaßkappe **31** , in **Fig. 2a** mit loser aufgeschraubter Kappe und in **Fig. 2b** als geschlossenes Ablaßventil.

Das Anschluß-Außengewinde **21** ist entweder mit einem Dicht-/O-Ring **25** versehen oder ein oberer Gewindegang erhält einen dichtenden Überzug eines Elastomers - eine Gewindedichtung - um das Anschlußstück dichtend in ein Gehäuse zu montieren. Ein davon oberhalb angebrachtes weiteres Aufnahme-Außengewinde **22** nimmt eine Schraubkappe **3** in verschiedenen Ausführungen, hier als Ablaßkappe **31** mit Innengewinde **33** auf. Das Ventilkörper-Anschlußstück hat darüber hinaus eine innenliegende, ebenfalls topfförmige Aufnahme **27** für die Positionierung des Rückschlagventils bestehend aus Druckfeder **23** und Kugeldichtung **24** . Ein in den Topf weisender zylinderförmiger Überstand/Kragen **28** hilft, Kugeldichtung und Feder in der Aufnahme zu verrasten. Ein Führungszylinder **26** nimmt applikationsbezogene Aufgaben wahr; im Falle des Ablaßventils dichtet der Hohlzylinder gegen die Flachdichtung **34** der Ablaßkappe. Eine Griffriffelung **32** der Kappe dient der besseren manuellen Handhabbarkeit derselben.

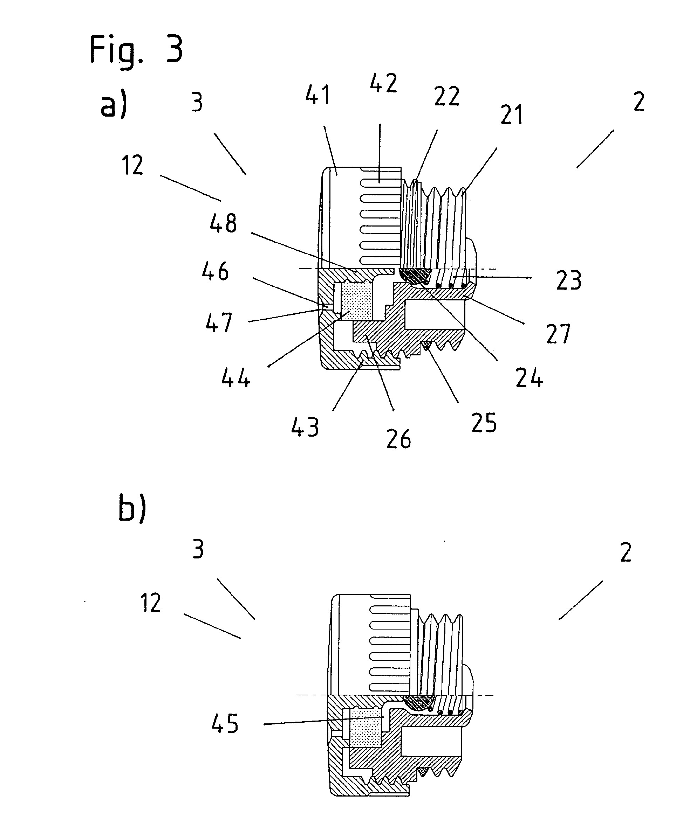

**Fig. 3** zeigt das semipermeable Entlüftungsventil **12** aus der Kombination von Ventilkörper-Anschlußstück **2** und Entlüftungskappe **41**, in **Fig. 3a** mit loser aufgeschraubter Kappe und in Fig. 3b als geschlossenes Entlüftungsventil mit Dauerlüftung.

Die Schraubkappe weist einen kleinen Kanal/Bohrung **46** im Deckel auf, der zum Außenraum mit einem Auslaß **47** abschließt und die Verbindung zwischen Ventilinnenraum und Außenraum herstellt. Außerdem gehört eine semipermeable Membranpatrone **44** zum Geräteumfang, die im Entlüftungskanal **45** positioniert, durch den Führungszylinder **26** getragen wird und eine Zwangsführung der Entlüftung über die Membranpatrone bewirkt. Weiterhin besitzt die Entlüftungsschraubkappe ein Innengewinde **43** und innen zentral einen Führungsstift **48** als Öffner, der in Abhängigkeit der Kappen-Schraubtiefe auf die federbeaufschlagte Kugeldichtung **23** , **24** des Rückschlagventils wirkt und dieses zu Öffnen in der Lage ist. Über die semipermeable Membran werden Gase in den Außenraum diffundieren; für flüssige Medien stellt die semipermeable Membran eine Sperre dar. Die semipermeable Membranpatrone ist in einer Sandwich-Bauweise geschichtet aufgebaut; enthält eine Träger- / Membran- / Trägermaterialfolge und wird randgedichtet in die vorgesehene Kammer - durch die Schraubkappe **41** und den Führungszylinder **26** gestützt - des Entlüftungsventils **13** eingebracht. Die Membranverarbeitung setzt saubere Umgebungen voraus.

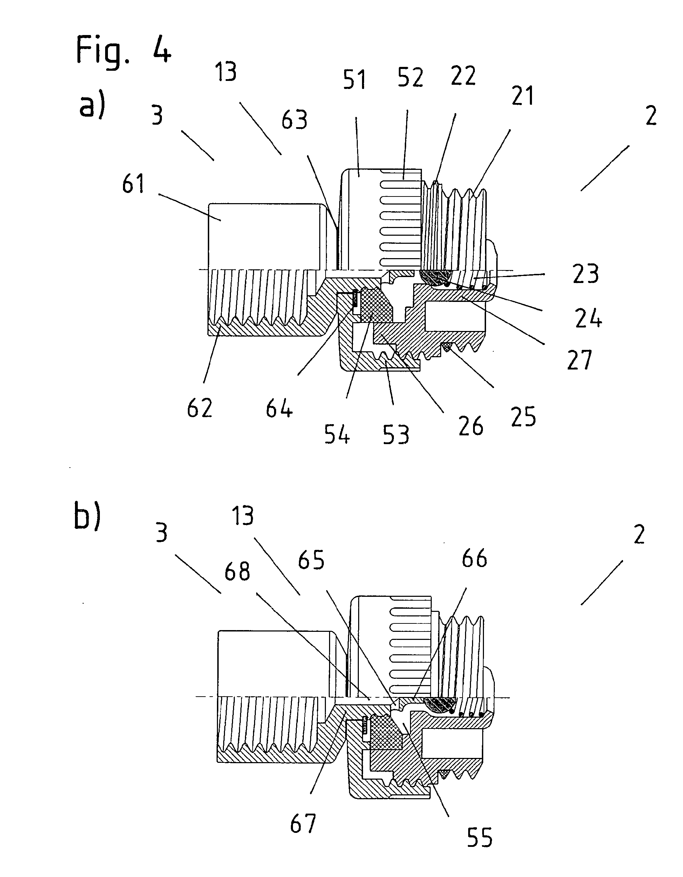

**Fig. 4** zeigt das Meßventil **13** aus der Kombination von Ventilkörper-Anschlußstück **2** und Meßkappe **51** und Meßanschluß **61**, in **Fig. 4a** mit loser aufgeschraubter Kappe und in **Fig. 4b** als geschlossenes Meßventil.

Zu diesem Zweck ist die Schraubkappe **51** mit einer Durchgangsbohrung versehen, um diese für die Aufnahme des Meßanschlusses **61** vorzubereiten.
- Der Meßanschluß ist ein zylindrischer topfförmiger Hohlkörper mit Innengewinde **62** - nicht zwingend vorgegeben - und auf der seiner Öffnung entgegengesetzten Seite mit einem Befestigungsschaft **67** versehen und der in der dafür vorbereiteten Schraubkappe mittels eines Befestigungsrings **64** und einer Unterlegscheibe **63** drehbar befestigt wird.
- Außerdem hat der Befestigungsschaft einen Medienkanal 68 in Form einer axialen mittigen Sackbohrung sowie an dessen unterem Ende eine Querbohrung 65 , die mit der Sackbohrung durchgängig in Verbindung steht.
- Gemäß einer weiteren vorteilhaften Ausgestaltung der Erfindung weist der Befestigungsschaft unterhalb der Sackbohrung einen Führungsstift **66** auf, der auf die federbeaufschlagte Kugeldichtung **23 , 24** des Rückschlagventils des Ventilkörper-Anschlußstücks **2** wirkt. Je weiter die Schraubkappe - Innengewinde **53** - mit dem Anschlußstück - Außengewinde **22 -** verschraubt wird, desto weiter öffnet sich die federbeaufschlagte Kugeldichtung und gibt einen Medien- oder Fluidkanal **55 , 65 , 68** frei.

Meßanschluß und Schraubkappe sind mittels eines Dichteinsatzes 54 gegeneinander gedichtet. Die Schraubkappe weist außer der Durchgangsbohrung für den Meßanschluß nur noch die Besonderheit der innen, unterhalb des Deckels liegenden Aussparung für die Aufnahme des Befestigungsrings 64 auf.

Wird in einer weiteren vorteilhaften Ausgestaltung der Erfindung der Dichteinsatz **54** der Meß-Schraubkappe **51** durch eine semipermeable Membrananordnung gleicher Abmessungen ersetzt und der Meßanschluß **61** anschlußseitig flüssigkeitsdicht verschraubbar gestaltet, ist das Meßventil **13** zu einem Kombi-Meß-/Entlüftungsventil ertüchtigt; die Meß-Schraubkappe **51** mit Meßanschluß **61** muß nach dem Prüf- und Wartungsvorgang nicht abgenommen und gegen das Entlüftungsventil **12** getauscht werden.

Die mit der Erfindung erzielbaren Vorteile bestehen insbesondere darin, daß mit einer geringstmöglichen Anzahl von Teilen eines Systembaukastens für Be- und Entlüftungsautomaten während des ununterbrochenen Betriebs der Anlage alle erforderlichen Inspektionsarbeiten an Heizungs- und Warmwasseranlagen durchgeführt werden können. Beim Verbleib der Automatik-Entlüfter in der Anlage ist dieselbe dauerhaft luft- und luftblasenfrei, was energetisch große Vorteile mit sich bringt und den Komfort steigert.

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzrechtsansprüche wider.

### Bezugszeichenliste

- 1: Systembaukasten Be- und Entlüftungsautomat

- 11 1: Ablaßventil
- 12: Entlüftungsventil
- 13: Meßventil

- 2: Ventilkörper-Anschlußstück

- 21: Anschlußgewinde

- 211: Außengewinde 1/8"
- 212: Außengewinde 1/4"
- 213: Außengewinde 3/8"
- 214: Außengewinde 1/2"

- 22: Aufnahmegewinde
- 23: Druckfeder
- 24: Kugeldichtung
- 25: Gewindedichtung

- 26: Führungszylinder
- 27: Aufnahme
- 28: Überstand, Kragen

- 3: Schraubkappe

- 31: Ablaßkappe
- 32: Griffriffelung
- 33: Innengewinde
- 34: Dichtscheibe, Flachdichtung

- 41: Entlüftungskappe
- 42: Griffriffelung
- 43: Innengewinde
- 44: Membranpatrone
- 45: Kanal

- 46: Deckelbohrung
- 47: Auslaß
- 48: Öffner, Führungsstift

- 51: Meßkappe
- 52: Griffriffelung
- 53: Innengewinde
- 54: Dichteinsatz
- 55: Kanal

- 61: Meßanschluß
- 62: Innengewinde
- 63: Scheibe
- 64: Befestigungsring
- 65: Bohrung

- 66: Öffner, Führungsstift
- 67: Schaft
- 68: Kanal

- 7: Wasserfangbehälter

- 71: Behälter
- 72: Anschlußstutzen
- 73: Anschluß-Dichtgewinde
- 74: Entlüftungsstutzen
- 75: Entlüftung

## Patentansprüche

1. Be- und Entlüftungsautomat als Systembaukasten - insbesondere ein automatisches Be- und Entlüftungsventil für Heizungs- und Warmwasseranlagen oder geschlossene Rohrkreisläufe unter besonderer Berücksichtigung des Einsatzes von Wiederverwendungsteilen und des hydraulischen Abgleichs, **dadurch gekennzeichnet,**
- **daß** der Systembaukasten (1) ein Ablaß- (11), ein Entlüftungs- (12) und ein Meßventil (13) und einen Wasserfangbehälter (7) umfaßt,
- **daß** das Ablaß-, Entlüftungs- und Meßventil aus einer Ablaß- (31), Entlüftungs- (41) und Meß-Schraubkappe (51) mit Meßanschluß (61) und einem, für alle Kappen gemeinsamen Ventilkörper-Anschlußstück (2) gebildet wird,
- **daß** das zylinderförmige Ventilkörper-Anschlußstück auf der der Schraubkappe zugewandten Seite einen rohrförmigen, im Schnitt nahezu quadratischen, hervorstehenden Führungszylinder (26) besitzt,
- **daß** im Fall des Ablaßventils die Vor-Kopf-Kreisfläche des Führungszylinders eine Dichtfläche zur eingelegten Schraubkappen-Dichtscheibe (34),
- **daß** im Fall des Entlüftungsventils die Innenfläche des Führungszylinders eine Dichtfläche zur eingelegten semipermeablen Schraubkappen-Membranpatrone (44) und
- **daß** im Fall des Meßventils die Innenfläche des Führungszylinders eine Dichtfläche zum eingelegten Schraubkappen-Dichteinsatz (54) ist.

2. Be- und Entlüftungsautomat als Systembaukasten nach Anspruch 1, **dadurch gekennzeichnet, daß** das zylinderförmige Ventilkörper-Anschlußstück (2) in seiner Mitte eine in axialer Richtung gelagerte, topfförmige, zur Schraubkappe hin offene Aufnahme (27) mit einer federbeaufschlagten (23) Kugeldichtung (24) besitzt.

3. Be- und Entlüftungsautomat als Systembaukasten nach mindestens einem der Ansprüche 1 und 2, **dadurch gekennzeichnet, daß** das anlagenseitige Anschlußgewinde (21) des zylinderförmigen Ventilkörper-Anschlußstücks (2) mit einer Gewindedichtung (25) versehen ist.

4. Be- und Entlüftungsautomat als Systembaukasten nach mindestens einem der Ansprüche 1 bis 3, **dadurch gekennzeichnet, daß** das zylinderförmige Ventilkörper-Anschlußstück (2) in Verbindung mit der mit einer semipermeablen Membranpatrone (44), einer Deckelbohrung (46) mit Auslaß (47) und mit einem mittig angeordneten, axial auf die federbeaufschlagte (23) Kugeldichtung (24) des Anschlußstücks (2) gerichteten Führungsstift (48) versehenen Entlüftungs-Schraubkappe (41) in zusammengeschraubtem Zustand, wobei der Führungsstift die Kugeldichtung öffnet (Fig. 3b), einen gasdurchlässigen Medienkanal (45, 44, 46, 47) bildet.

5. Be- und Entlüftungsautomat als Systembaukasten nach mindestens einem der Ansprüche 1 bis 4, **dadurch gekennzeichnet, daß** die semipermeable Membranpatrone (44) der Entlüftungs-Schraubkappe (41) bei geöffnetem Kugelventil (23, 24) des Anschlußstücks (2) in gefügtem Zustand von Kappe (41) und Anschlußstück (2) für den Medienkanal (45) eine Flüssigkeitssperre ist.

6. Be- und Entlüftungsautomat als Systembaukasten nach mindestens einem der Ansprüche 1 bis 5, **dadurch gekennzeichnet, daß** der Meßanschluß (61) mittels seines Schafts (67) in der Meß-Schraubkappe (51) durch den Befestigungsring (64) fest gefügt aber drehbar gelagert ist.

7. Be- und Entlüftungsautomat als Systembaukasten nach mindestens einem der Ansprüche 1 bis 6, **dadurch gekennzeichnet, daß** das zylinderförmige Ventilkörper-Anschlußstück (2) in Verbindung mit der mit einem Dichteinsatz (54) und einem Meßanschluß (61) versehenen Meß-Schraubkappe (51) in zusammengeschraubtem Zustand, wobei der Führungsstift (66) des Schafts (67) des Meßanschlusses (61) die Kugeldichtung (23, 24) öffnet (Fig. 4b), einen Medienkanal (55, 65, 68) bildet.

8. Be- und Entlüftungsautomat als Systembaukasten nach mindestens einem der Ansprüche 1 bis 7, **dadurch gekennzeichnet, daß** der Dichteinsatz (54) der Meß-Schraubkappe (51) des Meßventils (13) durch eine semipermeable Membrananordnung gleicher Abmessungen ersetzt und der Meßanschluß (61) anschlußseitig flüssigkeitsdicht verschraubbar gestaltet ist.

9. Be- und Entlüftungsautomat als Systembaukasten nach mindestens einem der Ansprüche 1 bis 8, **dadurch gekennzeichnet, daß** das Außengewinde (73) des Wasserfangbehälters (7) passend zum Innengewinde (62) des Meßanschlusses (61) des Meßventils (13) gestaltet ist.

10. Be- und Entlüftungsautomat als Systembaukasten nach mindestens einem der Ansprüche 1 bis 9, **dadurch gekennzeichnet, daß** der Wasserfangbehälter (7) einen Entlüftungsstutzen (74) mit einer Entlüftung auch einer Membranentlüftung (75) und eine Behälter-Zustandsanzeige mit Signalisierung besitzt.

11. Be- und Entlüftungsautomat als Systembaukasten nach mindestens einem der Ansprüche 1 bis 10, **dadurch gekennzeichnet, daß** die semipermeable Membranpatrone (44) in einer Sandwich-Bauweise geschichtet aufgebaut ist, eine Träger- / Membran- / Trägermaterialfolge enthält und randgedichtet in die vorgesehene Kammer - durch die Schraubkappe (41) gehalten und den Führungszylinder (26) des Anschlußstücks (2) gestützt - des Entlüftungsventils (12) eingebracht ist.
